(19) Europäisches Patentamt / European Patent Office / Office européen des brevets

(11) **EP 4 410 161 A1**

(12) **EUROPEAN PATENT APPLICATION**

(43) Date of publication:
07.08.2024 Bulletin 2024/32

(21) Application number: 23194088.3

(22) Date of filing: 29.08.2023

(51) International Patent Classification (IPC):
*A47J 43/00* (2006.01)  *A47J 43/046* (2006.01)
*G10K 11/16* (2006.01)  *F01N 1/00* (2006.01)
*A47J 43/07* (2006.01)  *F01N 1/08* (2006.01)

(52) Cooperative Patent Classification (CPC):
**G10K 11/161; A47J 43/07; F01N 1/08;**
F01N 2590/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2023 US 202318103720**

(71) Applicant: **SharkNinja Operating LLC
Needham, MA 02494 (US)**

(72) Inventor: **Lacoma, Max
Needham, MA, 02494 (US)**

(74) Representative: **Harris, Oliver John Richard
Novagraaf UK
3rd Floor
77 Gracechurch Street
London EC3V 0AS (GB)**

(54) **ACOUSTIC MUFFLER FOR A MOTORIZED FOOD PROCESSING DEVICE**

(57)    An acoustic muffler for reducing noise emitted by a motorized food processing device is disclosed. The acousic muffler includes a central chamber connected to both an inlet chamber and an outlet chamber. The inlet chamber is positioned to receive air and noise emitted by the food processing device's motor and the outlet chamber is open to the external environment. The cross-sectional area of the central chamber is greater than or less than the cross-sectional areas of the inlet chamber and the outlet chamber. By adjusting the relative cross-sectional areas of the inlet chamber, central chamber, and outlet chamber, the acoustic muffler can be tuned to reduce noise emitted by the food processing device in a specific frequency range. Additionally, since the acoustic muffler permits air to flow freely to and from the device's motor, cooling of the motor is not significantly impacted.

FIG. 1

EP 4 410 161 A1

**Description**

FIELD OF THE INVENTION

The present disclosure relates to an acoustic muffler for a motorized food processing device and, more particularly, to an acoustic muffler having a central expansion or contraction chamber to attenuate sound within a certain frequency range.

BACKGROUND

Home appliances with electric motors, such as, for example, blenders, ice cream makers, and stand mixers can be very loud. A common method of noise reduction is to surround portions of the appliance with foam. However, foam restricts air flow and makes it harder to cool the motor. Another approach is to seal the motor off from the outside environment. This approach creates similar complications since there is no external airflow available to cool the motor. Some blenders and other similar devices are partially sealed and include an exhaust/intake vent that allows external air to flow into the motor and then exit the device. This can provide sufficient air flow for the device's motor, but results in significant noise being released into the environment. A solution is needed to reduce undesirable noise emitted by food processing devices without compromising air flow to and from the motor.

SUMMARY

The disclosure describes an acoustic muffler for a motorized food processing device. In some embodiments, the acoustic muffler includes a central chamber having an attached inlet chamber and outlet chamber. By adjusting the dimensions of the chambers, specifically the relative cross-sectional areas of the inlet chamber, central chamber, and outlet chamber, the acoustic muffler can be tuned to reduce noise emitted by the food processing device in a specific frequency range. Additionally, since the presently disclosed acoustic muffler permits external air to flow freely to and from the device's motor, cooling of the motor is not significantly impacted. Embodiments of the acoustic muffler, food processing devices that include the acoustic muffler, and related methods of use of the disclosed devices may include one or more of the following, in any suitable combination.

Embodiments of an acoustic muffler for a motorized food processing device as disclosed herein include an acoustic muffler with an inlet chamber, a central chamber in fluid communication with the inlet chamber, and an outlet chamber in fluid communication with the central chamber and an external environment. The inlet chamber has a first cross-sectional area ($A_1$), the central chamber has a second cross-sectional area ($A_2$), and the outlet chamber has a third cross-sectional area ($A_3$). $A_2$ is either greater than or less than each of $A_1$ and $A_3$. $A_2$ may be at least three times greater than each of $A_1$ and $A_3$ or three times less than each of $A_1$ and $A_3$. In embodiments in which $A_2$ is at least three times greater than each of $A_1$ and $A_3$, the central chamber is an expansion chamber. In embodiments in which $A_2$ is at least three times less than each of $A_1$ and $A_3$, the central chamber is a contraction chamber. $A_1$, $A_2$, and $A_3$ are measured along a plane perpendicular to a direction of sound propagation ($D_s$) through the acoustic muffler.

In some embodiments, the motorized food processing device is at least one selected from the group of: an ice cream maker, a blender, a mixer, a micro puree machine, and a type of food processing device capable of blending, mixing, pureeing, slicing, dicing, chopping, grating, shaving, peeling, grinding, squeezing, folding, and/or kneading. The outlet chamber may be open to air surrounding the motorized food processing device and the inlet chamber may be in fluid communication with air expelled from a motor of the motorized food processing device. In these and other embodiments, the acoustic muffler reduces sound pressure emitted by the motorized food processing device by at least 2 dB. In select embodiments, the acoustic muffler has a cutoff frequency at approximately 500 Hz, with a maximum transmission loss at approximately at 2300 Hz. The acoustic muffler may also include a funnel-shaped region positioned to receive air exhausted from the motor and direct the air to the inlet chamber. In some embodiments, the central chamber has a length measured along a direction of sound propagation ($D_s$) through the acoustic muffler, and the length is less than a wavelength of a prominent frequency emitted by the motorized food processing device. In select embodiments, the outlet chamber may be directed toward a rear of the motorized food processing device.

In another aspect, methods of reducing sound emitted by a food processing device are also disclosed. These methods may include operating a motor of the food processing device, directing air exhausted by the motor and noise generated by the motor into a funnel-shaped region leading to an acoustic muffler having an inlet chamber fluidly connected to a central chamber that is fluidly connected to an outlet chamber open to an external environment, and directing the air exhausted by the motor and the noise generated by the motor through the acoustic muffler and into the external environment.

In some embodiments, the inlet chamber has a first cross-sectional area ($A_1$), the central chamber has a second cross-sectional area ($A_2$), and the outlet chamber has a third cross- sectional area ($A_3$). $A_1$, $A_2$, and $A_3$ are each measured

along a plane perpendicular to a direction of sound propagation ($D_s$) through the acoustic muffler, and $A_2$ is at least three times greater than each of $A_1$ and $A_3$ or three times less than each of $A_1$ and $A_3$. The food processing device may be at least one selected from the group of: an ice cream maker, a blender, a mixer, a micro puree machine, and a type of food processing device capable of blending, mixing, pureeing, slicing, dicing, chopping, grating, shaving, peeling, grinding, squeezing, folding, and/or kneading. In some embodiments, the acousic muffler reduces the sound emitted by the food processing device by at least 2 dB or by at least 4 dB. If desired, the air exhausted by the motor and the noise generated by the motor may exit the acoustic muffler via the outlet chamber positioned in the rear of the food processing device.

In yet another aspect, a food processing device having reduced noise output is disclosed. The food processing device includes a housing containing a motor with an air intake and an air exhaust and a noise reduction assembly. The noise reduction assembly includes an acoustic muffler with an inlet chamber, an outlet chamber, and a central chamber in fluid connection with both the inlet chamber and the outlet chamber. The outlet chamber is open to air surrounding the housing. The noise reduction assembly also includes a funnel-shaped region positioned proximate to the air exhaust from the motor and entends to the inlet chamber. The inlet chamber has a first cross-sectional area ($A_1$), the central chamber has a second cross-sectional area ($A_2$), and the outlet chamber has a third cross-sectional area ($A_3$), each measured along a plane perpendicular to a direction of sound propagation ($D_s$) through the acoustic muffler. $A_2$ is at least three times greater than each of $A_1$ and $A_3$ or three times less than each of $A_1$ and $A_3$. In some embodiments, the noise reduction assembly reduces a noise output of the food processing device by at least 2 dB.

A reading of the following detailed description and a review of the associated drawings will make apparent the advantages of these and other structures. Both the foregoing general description and the following detailed description serve as an explanation only and do not restrict aspects of the disclosure as claimed.

BRIEF DESCRIPTION OF THE DRAWINGS

Reference to the detailed description, combined with the following figures, will make the disclosure more fully understood, wherein:

FIG. 1 shows a food processing device outfitted with an acoustic muffler in accordance with some embodiments of this disclosure;

FIG. 2A shows a bottom perspective view of the food processing device and acoustic muffler of FIG. 1, according to some embodiments;

FIGS. 2B and 2C illustrate the acoustic muffler of FIG. 2A, shown without the food processing device, according to some embodiments;

FIGS. 3A and 3B illustrate a base plate for a food processing device configured to couple to an acoustic muffler, according to some embodiments;

FIGS. 4A-4C illustrate a noise reduction assembly for a food processing device, according to some embodiments;

FIG. 5A illustrates a schematic diagram of a resonance chamber that may be used in connection with the disclosed acoustic muffler, according to some embodiments;

FIGS. 5B and 5C illustrate a noise reduction assembly having an acoustic muffler with a resonance chamber, according to some embodiments;

FIG. 6 illustrates a method of using a food processing device outfitted with an acoustic muffler, according to some embodiments;

FIG. 7 illustrates a graph of calculated power transmission coefficient values for various frequencies of an example of an acoustic muffler configured in accordance with some embodiments;

FIG. 8 illustrates a graph of measured frequency content for an example of a food processing device without an acoustic muffler as disclosed herein;

FIG. 9 illustrates a graph of calculated power transmission coefficient and transmission loss of an example of an acoustic muffler, according to some embodiments;

FIG. 10 illustrates a graph of measured averaged sound pressure level of a food processing device, with and without an acoustic muffler, according to some embodiments; and

FIG. 11 illustrates a graph of measured averaged sound pressure level of a food processing device, with and without an acoustic muffler, according to some embodiments.

DETAILED DESCRIPTION

In the following description, like components have the same reference numerals, regardless of different illustrated embodiments. To illustrate embodiments clearly and concisely, the drawings may not necessarily reflect appropriate scale and may have certain structures shown in somewhat schematic form. The disclosure may describe and/or illustrate structures in one embodiment, and in the same way or in a similar way in one or more other embodiments, and/or combined with or instead of the structures of the other embodiments.

In the specification and claims, for the purposes of describing and defining the invention, the terms "about" and "substantially" represent the inherent degree of uncertainty attributed to any quantitative comparison, value, measurement, or other representation. The terms "about" and "substantially" moreover represent the degree by which a quantitative representation may vary from a stated reference without resulting in a change in the basic function of the subject matter at issue. Open-ended terms, such as "comprise," "include," and/or plural forms of each, include the listed parts and can include additional parts not listed, while terms such as "and/or" include one or more of the listed parts and combinations of the listed parts. Use of the terms "top," "bottom," "above," "below" and the like helps only in the clear description of the disclosure and does not limit the structure, positioning and/or operation of the acoustic muffler in any manner.

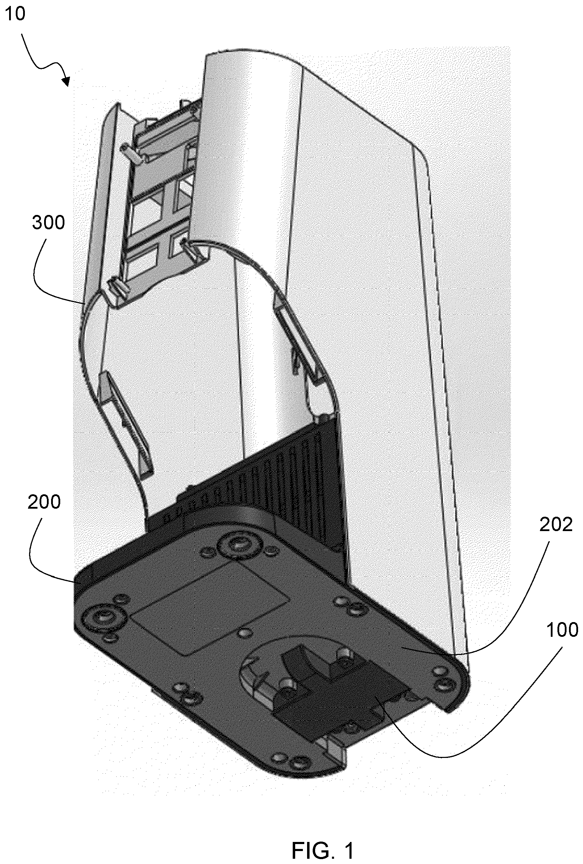

An acoustic muffler for a motorized food processing device is disclosed, along with related devices, noise reduction assemblies, and methods. FIG. 1 shows a perspective view of an exemplary food processing device 10 having an acoustic muffler 100 configured in accordance with an embodiment of the present disclosure. The food processing device 10 may be any type of motorized food processing device, such as a blender, ice cream maker, mixer, micro puree machine, or other type of food processing device capable of blending, mixing, pureeing, slicing, dicing, chopping, grating, shaving, peeling, grinding, squeezing, folding, kneading, or any suitable combination of the foregoing.

As shown in FIG. 1, the food processing device 10 includes a lower housing 200 attached to an upper housing 300. If desired, a middle housing may extend between the lower housing 200 and the upper housing. The upper housing 300 may include an interface for receiving user inputs to control the food processing device 10 and/or display information. The food processing device 10 may also include a removable container and/or lid. A user may couple the container to a coupling on a surface of the upper housing 300 (e.g., by rotating the container relative to the coupling). When engaged with the coupling, the container may or may not be aligned with a vertical axis of the food processing device 10. In embodiments in which the container is not aligned with a vertical axis of the food processing device 10 when the container is engaged with the coupling, the container may form an angle of between 1 degree and 180 degrees (such about 45 degrees to about 55 degrees) relative to the vertical axis.

The food processing device 10 includes a motor to drive components within the device 10 to perform the intended food processing function(s). Various types of motors for food processing devices are known in the relevant art and the disclosed acoustic mufflers 100 can be used in connection with food processing devices having any type of known AC or DC motor.

The motor may be positioned within the lower housing 200 or the upper housing 300 of device 10, as desired.

The acoustic muffler 100 is positioned proximate to the motor of the food processing device 10. For example, as shown in FIG. 1, the acoustic muffler 100 may be positioned within the lower housing 200. However, in other embodiments, the acoustic muffler 100 may be positioned in the upper housing 300 or in another location, depending on where the device's motor resides. In some embodiments, such as the food processing device 10 shown in FIG. 1, the lower housing 200 may include a base plate 202 to which the acoustic muffler 100 may be attached. The acoustic muffler 100 may be attachable to and/or removable from the base plate 202. However, in other embodiments, the base plate 202 and the acoustic muffler 100 may be fixedly joined together or may be integrally formed as a single component. Numerous configurations are possible and contemplated herein

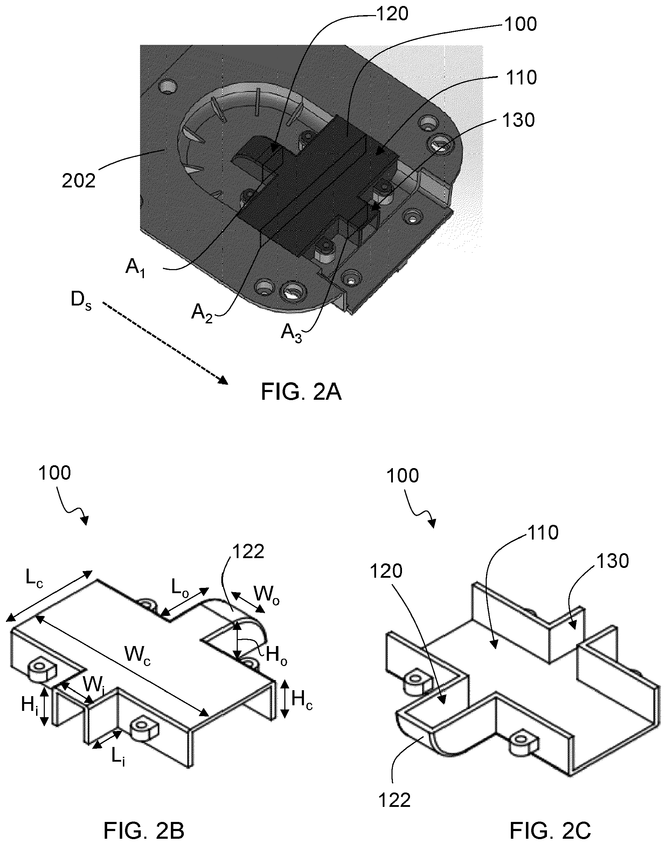

FIG. 2A illustrates a bottom perspective view of an exemplary acoustic muffler 100 configured in accordance with an embodiment of the subject disclosure attached to a base plate 202 of a food processing device. FIGS. 2B and 2C illustrate alternative views of the acoustic muffler 100 shown in FIG. 2A, without the base plate 202 present. The acoustic muffler 100 includes a central chamber 110 connected to both an inlet chamber 120 and an outlet chamber 130.

The inlet chamber 120 may be positioned to receive acoustic energy (i.e., sound or noise) from a motor of the food processing device. In some embodiments, the inlet chamber 120 may be open to an air cavity surrounding the motor of the food processing device. In these and other embodiments, the inlet chamber 120 may be positioned directly beneath, adjacent to, or above the motor of the food processing device to receive air exhausted by the motor and sound generated by the motor. The inlet chamber 120 may be fluidly connected to the central chamber 110 and the central chamber 120 may be fluidly connected to the outlet chamber 130 to permit acoustic energy and air and noise to flow from the motor of the food processing device, through the acoustic muffler 100, and into the external environment (i.e., air surrounding the device 10). The outlet chamber releases air and acoustic energy into the external environment. The outlet chamber may be positioned to release air and acoustic energy from the rear of the food processing device 10 to minimize the noise heard by a user who is located at the front of the device 10.

The overall direction of sound propagation ($D_s$) through the acoustic muffler 100 is illustrated in FIG. 2A. As shown in FIG. 2A, $D_s$ extends from the inlet chamber 120, through the central chamber 110, and then to the outlet chamber 130. The cross-sectional area of each chamber is also illustrated in FIG. 2A, with $A_1$ showing the cross-sectional area of the inlet chamber 120, $A_2$ showing the cross-sectional area of the central chamber 110, and $A_3$ showing the cross-sectional area of the outlet chamber 130. The cross-sectional areas of the inlet chamber 120, central chamber 110, and outlet chamber 130 are each measured along a plane perpendicular to $D_s$. As shown in FIG. 2A, the cross-sections of the inlet chamber 120, central chamber 110, and outlet chamber 130 may each be rectangular. However, other configurations are also possible. For example, in some embodiments, the inlet chamber 120, central chamber 110, and/or outlet chamber 130 may have rectangular, square, trapezoidal, triangular, curved, or round cross-sections.

As discussed in more detail below, the dimensions of the inlet chamber 120, central chamber 110, and outlet chamber 130 may be selected to provide desired acoustic filtering. For example, in some embodiments, the central chamber 110 may be an expansion chamber and the cross-sectional areas of the inlet chamber 120 ($A_1$) and the outlet chamber 130 ($A_3$) may each be less than the cross-sectional area of the central chamber 110 ($A_2$). However, in other embodiments, the central chamber 110 may be a contraction chamber and the cross-sectional areas of the inlet chamber 120 ($A_1$) and the outlet chamber 130 ($A_3$) may each be greater than the cross-sectional area of the central chamber 110 ($A_2$). Thus, in select embodiments, $A_2$ is greater than $A_1$ and $A_3$. In some such embodiments, $A_2$ may be at least two, three, four, five, or more times greater than $A_1$ and $A_3$. In other embodiments, $A_2$ is less than $A_1$ and $A_3$. In some such embodiments, $A_2$ may be at least two, three, four, five, or more times less than $A_1$ and $A_3$. In various embodiments, $A_1$ may be equal to or approximately equal to $A_3$. However, in other embodiments, $A_1$ may be unequal to $A_3$.

The difference in cross-sectional area of each adjoining chamber within the acoustic muffler 100 creates a difference in acoustic impedance at each chamber interface. The acoustic impedance difference causes some frequencies to be transmitted and others to be reflected back to the source. If desired, the acoustic muffler can act as a low pass filter, allowing only low frequency sounds through. When attached to an air exhaust of a motor for a food processing device, the acoustic muffler 100 can significantly reduce the sound pressure transmitted to the user from the device. Additionally, since the acoustic muffler 100 allows the motor exhaust to exit the device 10, the disclosed acoustic muffler 100 maintains sufficient air flow to the motor, while also reducing noise emitted by the device.

FIGS. 2B and 2C illustrate the acoustic muffler of FIG. 2A without base plate 202. FIG. 2B shows a bottom perspective view of the acoustic muffler 100 and FIG. 2C shows a top perspective view of the acoustic muffler 100. As can be seen from FIGS. 2A-2C, the base plate 202 forms a top surface of the acoustic muffler 100 and also forms sides of the central chamber 110, effectively sealing in the inlet chamber 120 and central chamber 110 from the external environment, while leaving the outlet chamber 130 exposed to the external environment. In other embodiments, however, the acoustic muffler 100 may include a top surface that is distinct from the base plate 202. In some such embodiments, the acoustic muffler 100 may also include sidewalls for the central chamber 110 that are distinct from features of the base plate 202.

The acoustic muffler 100 may have any desired dimensions. As shown in FIGS. 2B and 2C, the inlet chamber 120 may have a length ($L_i$), width ($W_i$), and height ($H_i$), the outlet chamber may have a length ($L_o$), width ($W_o$), and height ($H_o$), and the central chamber may have a length ($L_c$), width ($W_c$), and height ($H_c$). In some embodiments, $H_i$, $H_o$, and $H_c$ may be equal or approximately equal. In these and other embodiments, $H_i$, $H_o$, and/or $H_c$ may be 5mm-25mm, 10mm-20mm, or 10mm-15mm. In these and other embodiments, $L_i$ and $L_o$ may be 5mm-25mm, 10-20mm, or 10mm-15mm. In some embodiments, $L_i$ and $L_o$ may be equal or approximately equal. $W_i$ and $W_o$ may have any measurement discussed herein with respect to $L_i$ and $L_o$. In some embodiments, $W_i$ is equal to $L_i$ and $W_o$ is equal to $L_o$. In some embodiments, $W_c$ is at least three times greater than or three times less than each of $W_i$ and $W_o$. $W_c$ may be . 5mm-10mm, 10mm-120mm, 50mm-100mm, or 60mm-80mm. Numerous configurations and variations are possible and contemplated herein.

As described in more detail below, the dimensions of the disclosed acoustic muffler 100 can be adjusted to reduce specific frequencies of sound. For example, the acoustic muffler 100 may be configured to reduce sound frequencies that are emitted by a particular food processing device. In select embodiments, the acoustic muffler 100 may be tuned to have a cutoff frequency (i.e., the frequency point where the power transmission coefficient reaches 0.5) at or approximately at 500 Hz, with maximum transmission loss at or approximately at 2300 Hz. In select embodiments, the acoustic muffler may show a reduction in high frequency acoustic content starting at or approximately at 1000 Hz and/or a sound pressure reduction of at least 2 dB(A), 3 dB(A), 4 dB(A), 5dB(A), or more. In these and other embodiments, the length of the central chamber ($L_c$) may be less than a wavelength of a prominent frequency emitted by the motorized food processing device.

As shown in FIGS. 2A-2C, the back sidewall 122 of the inlet chamber 120 may be curved. This configuration may be advantageous for embodiments in which the acoustic muffler 100 is positioned in the lower housing 200 of a device 10 and receives sound energy from above, such as shown in FIG. 1. In some such embodiments, the acoustic muffler 100 receives sound energy from above, and the curved back sidewall 122 of the inlet chamber 120 directs the sound energy received from above approximately 90° to the overall direction of sound propagation ($D_s$) through the acoustic muffler 100. However, in other embodiments the acoustic muffler 100 may be positioned to receive sound energy in the same direction as the overall direction of sound propagation ($D_s$) through the acoustic muffler 100 and, in some such embodiments, the sidewalls of the inlet chamber 120 may each be planar.

The acoustic muffler 100 shown in FIGS. 2A-2C includes only three chambers: an inlet chamber, 120, central chamber 110, and outlet chamber 130. In other embodiments, however, the acoustic muffler may include two or more central chambers, each attached to inlet/outlet chambers having significantly larger or smaller cross-sectional areas than the central chamber to impart acoustic impedance. For example, an acoustic muffler having two central chambers is contemplated herein. In such embodiments, the acoustic muffler includes an inlet chamber connected to a first central chamber that is connected to an outlet chamber connected to a second central chamber that is connected to an outlet chamber, which is exposed to the external environment. Other embodiments are also contemplated herein. For example, the acoustic muffler 100 may include internal baffles or other internal structures to direct acoustic energy as desired through the muffler 100.

The acoustic muffler 100 may be formed of any suitable solid material. In some embodiments, the acoustic muffler 100 may be formed of a polymeric material, composite, metal, or metal alloy. In select embodiments, the acoustic muffler 100 may be formed of steel, aluminum, polycarbonate, polyethylene terephthalate (PET), polyethylene terephthalate ethylene (PETE), polyethylene (PE), high-density polyethylene (HDPE), low-density polyethylene (HDPE), polyvinyl chloride (PVC), polypropylene (PP), and/or polystyrene (PS).

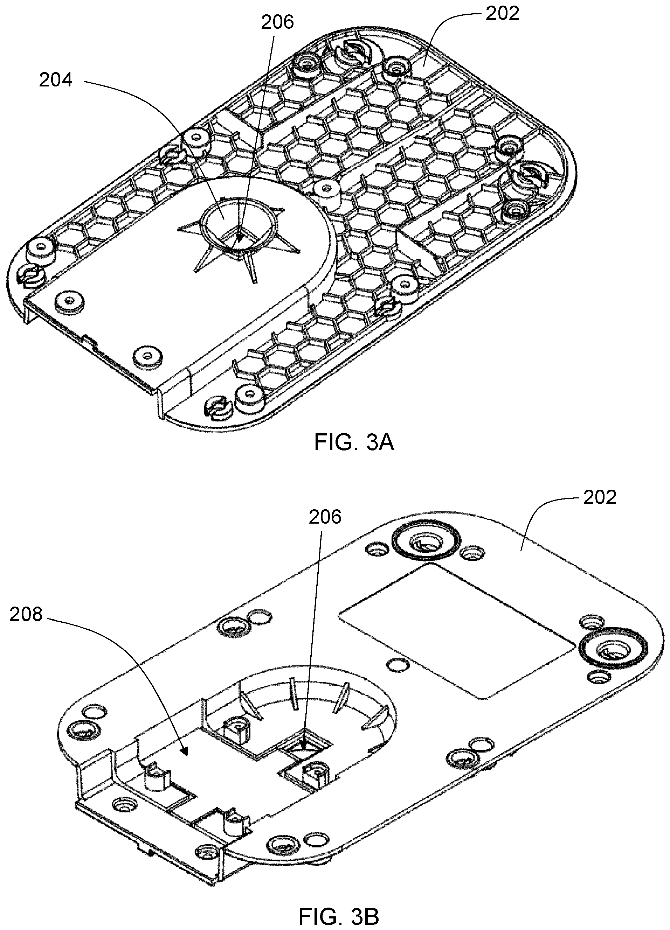

FIGS. 3A and 3B illustrate a base plate 202 for a food processing device 10 configured to couple to an acoustic muffler 100 as presently disclosed. FIG. 3A illustrates a top perspective view of the base plate 202 and FIG. 3B illustrates a bottom perspective view of the base plate 202. As shown in FIG. 3A, the top surface of the base plate 202 includes a funnel-shaped region 204 with an opening 206 that extends through to the bottom surface of the base plate 202. The funnel-shaped region 204 may be positioned to receive air and acoustic energy from a motor of the food processing device and direct the air and acoustic energy into the inlet chamber 120 of an acoustic muffler (not shown). As shown in FIG. 3B, the bottom surface of the base plate 202 may include a recessed region 208 sized and configured to receive an acoustic muffler as described herein.

The acoustic muffler 100 may be coupled to the base plate 202 shown in FIGS. 3A and 3B by placing the muffler 100 on the bottom surface of the base plate 202, with the inlet chamber 120 of the muffler 100 positioned over the opening 206. The acoustic muffler 100 may be releasably coupled to the base plate 202 with screws or other fasteners. However, in other embodiments, the acoustic muffler 100 may be permanently joined to the base plate 202 by welding, gluing, or other permanent fixation techniques.

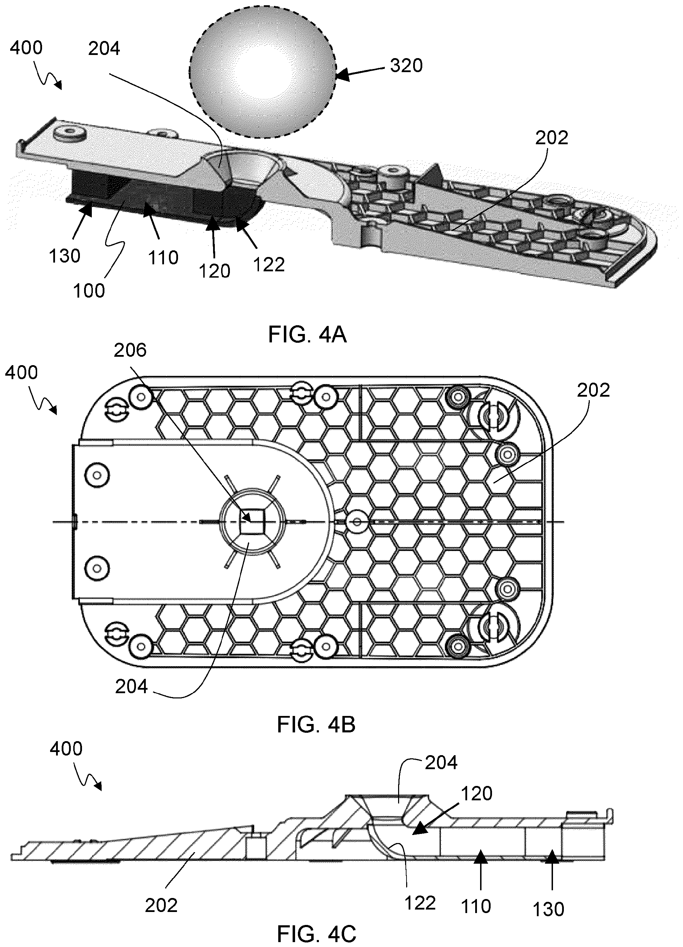

FIGS. 4A-4C illustrate a noise reduction assembly 400 for a food processing device that includes a base plate 202 coupled to an acoustic muffler 100. FIG. 4A shows a cross-sectional perspective view of the assembly 400, FIG. 4B shows a top view of the assembly 400, and FIG. 4C shows another cross-sectional view of the assembly 400. The cross-sectional views shown in FIGS. 4A and 4C are taken along the plane marked in FIG. 4B. The base plate 202 and acoustic muffler 100 may have any of the features previously described herein. In some embodiments, the funnel-shaped region 204 of the base plate 202 is positioned directly underneath a motor 320 that exhausts air downwards, such as shown in FIG. 4A. In some such embodiments, the motor 320 generates noise and airflow that both flow into the acoustic muffler 100 via the funnel- shaped region 204. The funnel-shaped region 204 increases the acoustic energy and air that enters the muffler's central chamber 110. The inlet chamber 120 includes a curved back sidewall 122 that diverts downwardly flowing air and acoustic energy 90° to flow through the central chamber 110 and outlet chamber 130 of the muffler 100 along a horizontal path.

In some embodiments, some or all features of the noise reduction assembly 400 may be integrated. For example, some or all features of the acoustic muffler 100 may be integrated with the funnel region 204 and/or other features of the base plate 202. In select embodiments, a noise reduction assembly 400 has an integrally formed acoustic muffler 100 and funnel region 204, which can be coupled to a base plate 202. In other embodiments, the noise reduction assembly 400 is a single component having all features of the acoustic muffler 100 and the base plate 202, which may be formed, for example, by injection molding or other techniques.

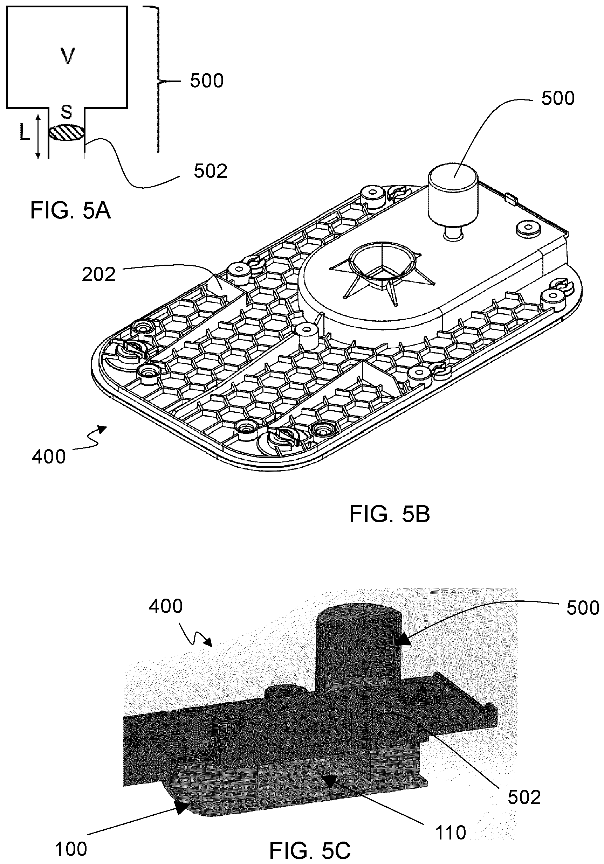

If desired, the acoustic muffler 100 may include one or more resonance chambers. A resonance chamber may act as an acoustic filter by reducing noise at a certain frequency. FIG. 5A illustrates a schematic diagram of an exemplary resonance chamber 500, namely a Helmholtz resonator structure. In FIG. 5A, "V" is the volume of air in the resonance chamber 500, "S" is the cross-sectional area of the neck 502, and "L" is the length of the neck 502. FIG. 5B illustrates a noise reduction assembly 400 having an acoustic muffler 100 with a resonance chamber 500 and baseplate 202. FIG. 5C illustrates a cross-sectional view of the noise reduction assembly 400 shown in FIG. 5B. As shown in FIG. 5C, the resonance chamber 500 extends from the central chamber 110 and is positioned in parallel with the overall direction of sound propagation through the acoustic muffler 100.

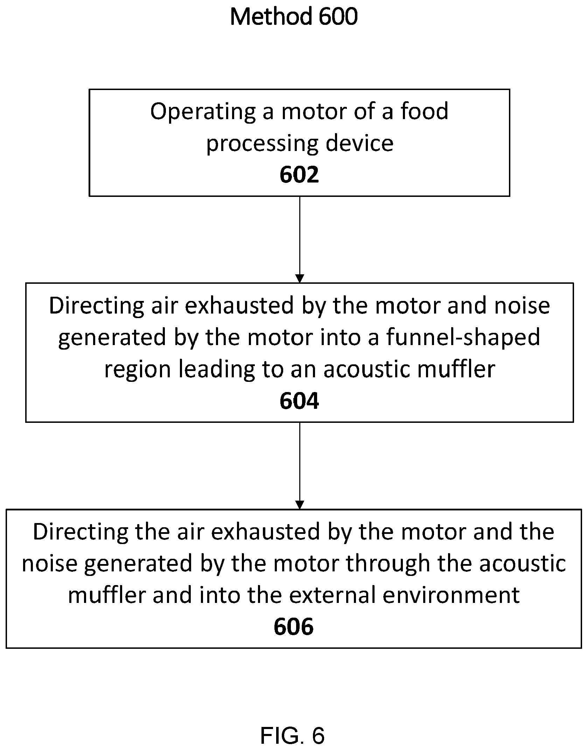

FIG. 6 illustrates a method of reducing sound emitted by a food processing device (method 600) using any of the devices and techniques disclosed herein. As shown in FIG. 6, method 600 includes operating a motor of the food processing device (602). Method 600 continues with directing air exhausted by the motor and noise generated by the motor into a funnel-shaped region leading to an acoustic muffler having an inlet chamber fluidly connected to a central chamber that is fluidly connected to an outlet chamber open to an external environment (604). Method 600 continues with directing the air exhasted by the motor and the noise generated by the motor through the acoustic muffler and into the external environment. Any food processing device, 10, motor 320, acoustic muffler 100, and/or noise reduction assembly 400 described herein may be used to carry out the elements of method 600.

In method 600, the food processing device may be at least one selected from the group of: an ice cream maker, a blender, a mixer, a micro puree machine, and a type of food processing device capable of blending, mixing, pureeing, slicing, dicing, chopping, grating, shaving, peeling, grinding, squeezing, folding, and/or kneading. In these and other embodiments, method 600 may reduce the sound emitted by the food processing device by at least 2 dB or at least 4 dB. In select embodiments, air and noise may exit the acoustic muffler via the outlet chamber at a rear of the food processing device.

While the disclosure particularly shows and describes preferred embodiments, those skilled in the art will understand that various changes in form and details may exist without departing from the spirit and scope of the present application as defined by the appended claims. The scope of this present application intends to cover such variations. As such, the foregoing description of embodiments of the present application does not intend to limit the full scope conveyed by the appended claims.

Additional Embodiments and Examples

Although some particular embodiments of the disclosed acoustic muffler have already been described in detail, additional and alternative embodiments of the acoustic muffler are also possible. Specifically, the disclosed acoustic muffler can be tuned to filter out desired sound frequencies. Techniques for adjusting dimensions of the disclosed acoustic muffler to reduce or eliminate particular sound frequencies are described below, along with experimental testing data, and possible methods of use.

As previously mentioned, food processing devices can create undesirable noise. Additionally, each type of food processing device has a unique frequency content. That is, each motorized device may produce different acoustic energy at different frequencies. Humans are more perceptive to sound frequencies of between 2000 and 5000 Hz. It could be helpful for the disclosed acoustic muffler to reduce noise in a frequency band produced by the food processing device to which it is coupled without reducing air flow around the motor.

Acoustic impedance is the opposition or resistance to acoustic flow which results from an acoustic pressure difference. In the disclosed muffler, acoustic impedance is the ratio of potential (pressure, $P$) to flow (volume velocity, $U$). Therefore, acoustic impedance can be expressed with Equation 1:

$$Z_{acs} = \frac{P}{\vec{U}}$$

Acoustic impedance is a frequency dependent variable and will have different values at different frequencies. So, the acoustic impedance of a component at 100 Hz may not be the same as the acoustic impedance of the same component at 500 Hz. To analyze how the disclosed acoustic muffler behaves, the acoustic impedance of the main duct (i.e., the inlet and outlet chambers) and central chamber should be considered.

The magnitude of acoustic particle velocity of a plane wave is equivalent to the magnitude of acoustic pressure divided by the product of the speed of sound ($c$) and air density ($\rho$). The acoustic impedance for a simple duct of cross-sectional area $S$ can then be calculated, knowing that the volume velocity $U$ is the product of particle velocity ($u$) and cross-sectional area. This is shown in Equation 2:

$$Z_{duct} = \frac{P}{\vec{U}} = \frac{P}{\vec{u}S} = \frac{P\rho c}{PS} = \frac{\rho c}{S}$$

While the density and speed of sound in each of the three chambers can be assumed constant, the cross-sectional area changes. Since the area of the central expansion chamber is larger than that of the inlet and outlet chambers, the acoustic impedances are different. This leaves 2 boundaries where the impedance of the medium must change. At each of these boundaries, conservation of mass, momentum, and frequency must be maintained. By applying these boundary conditions at the inlet and exit of the central (e.g., expansion) chamber, one can derive an expression for the pressure transmission coefficient, $T$, through the duct/chamber.

Knowing that $Z1$ (acoustic impedance of the inlet) and $Z3$ (acoustic impedance of the exit) are equal, Equation 3 results:

$$T = \frac{2}{2\cos(k_2 L) + j\left(\frac{S_2}{S_1} + \frac{S_1}{S_2}\right)\sin(k_2 L)}$$

In this equation, $k2$ is the wavenumber (ratio of angular frequency in the central expansion chamber to the speed of sound), $L$ is the length of the expansion chamber, and $j$ is the square root of -1. This will reveal how much of the acoustic pressure entering the duct is transmitted. For example, if the incident pressure is 10 Pa and the pressure transmission coefficient is 0.1, the transmitted pressure will only be 1 Pa. It is often more beneficial to look at the acoustic power transmission coefficient, which is the same idea, but tells how much acoustic power is transmitted through the duct/chamber. Because T is a complex number and $Z1=Z3$, the power transmission coefficient is just the pressure transmission coefficient multiplied by its complex conjugate. This is shown in Equation 4:

$$\tau = \frac{4}{4\cos^2(k_2 L) + \left(\frac{S_2}{S_1} + \frac{S_1}{S_2}\right)^2 \sin^2(k_2 L)}$$

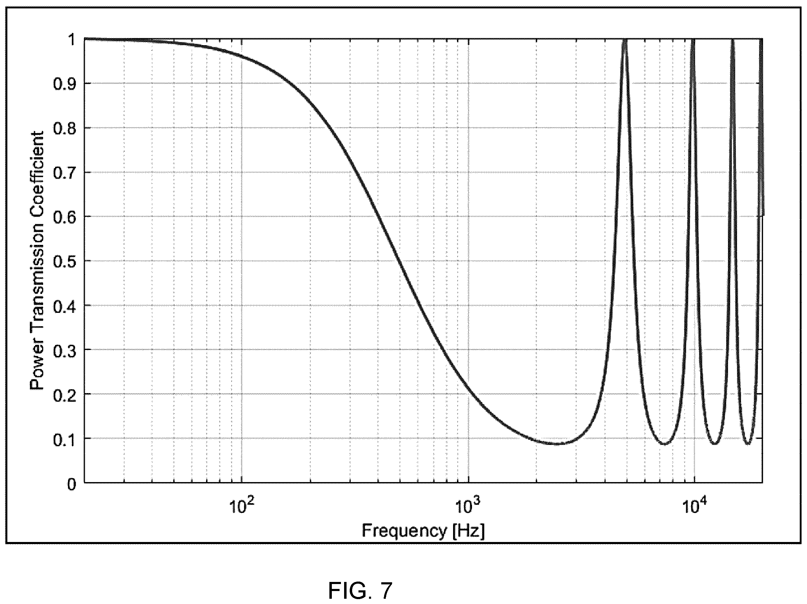

Since this is a function of the wavenumber, the power transmission through the central expansion chamber is a function of frequency, and this explains why changes in cross-sectional area affect different frequencies differently. It should also be noted that since S2/S 1 is added to S 1/S2, it does not matter whether or not S2 is larger than S 1 or vice versa. The same acoustic performance will result when there is a central "contraction" chamber instead of an expansion chamber. When $kL$ approaches 0, small angle approximations can be used, so cos(kL) is approximately 1 and sin(kL) is approximately 0. This makes the power transmission coefficient at very low frequencies extremely close to 1, indicating that all the energy of low frequency noise is passed through the acoustic muffler. A graph of the power transmission coefficient versus frequency for the dimensions of an exemplary acoustic muffler is shown in FIG. 7.

At lower frequencies, this has the effect of an acoustic low-pass filter. That is, the power transmission coefficient is close to 1 at low frequencies, so it "passes" low frequencies through. As the frequency gets higher, a much lower ratio of incident power is transmitted through. For this reason, this embodiment is good at attenuating high frequencies to an extent.

Example 1

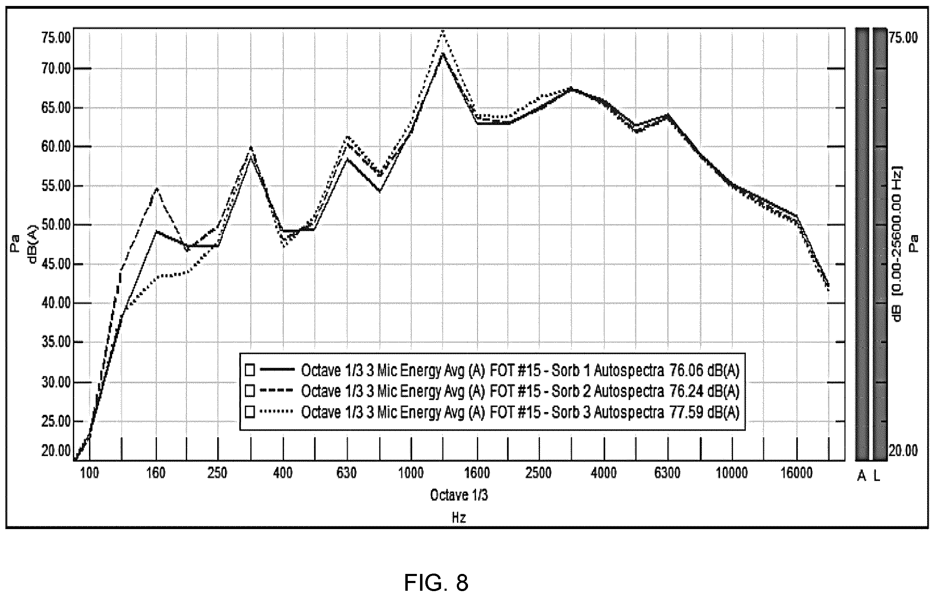

The frequency content of a food processing device (without a muffler) was measured. The food processing device used for this example was an NC 100 unit, commercially known as the "Ninja™ CREAMi® 7-in-1 Ice Cream Maker". The measured frequency content of this device is shown in FIG. 8. Frequency content was measured in 1/3rd octave bands, and three runs were conducted. As shown in FIG. 8, most of the acoustic energy is between 1000 and 4000 Hz (the highest decibel measurements on the graph).

Since most of the measured acoustic energy for this device was between 1000 and 4000 Hz, it would be beneficial to tune the length of the expansion chamber so that kL is less than 1. The kL value for the length of the central expansion chamber at 1000 Hz can be calculated using Equation 5:

$$k_2 L = \frac{\omega L}{c} = \frac{2\pi f L}{3}$$

For this embodiment, the kL value is 0.6411 at 1000 Hz and 2.5646 at 4000 Hz. Although this is not much less than 1, the muffler met space constraints for this particular food processing device. The resulting power transmission coefficient showed its first "valley" of high noise reduction between 1000 and 4000 Hz. This is an area where the NC100 device had the most noise and where humans are very sensitive to hearing. The value of the power transmission coefficient in this valley can be raised up or down depending on the ratio of the areas of the central chamber to the inlet/outlet. The larger the ratio of this area, the more noise reduction will result.

Using the power transmission coefficient, the transmission loss can also be calculated, which gives us the noise reduction in dB through the central chamber, shown in Equation 6:

$$TL = 10 \log_{10}\left(\frac{1}{\tau}\right)$$

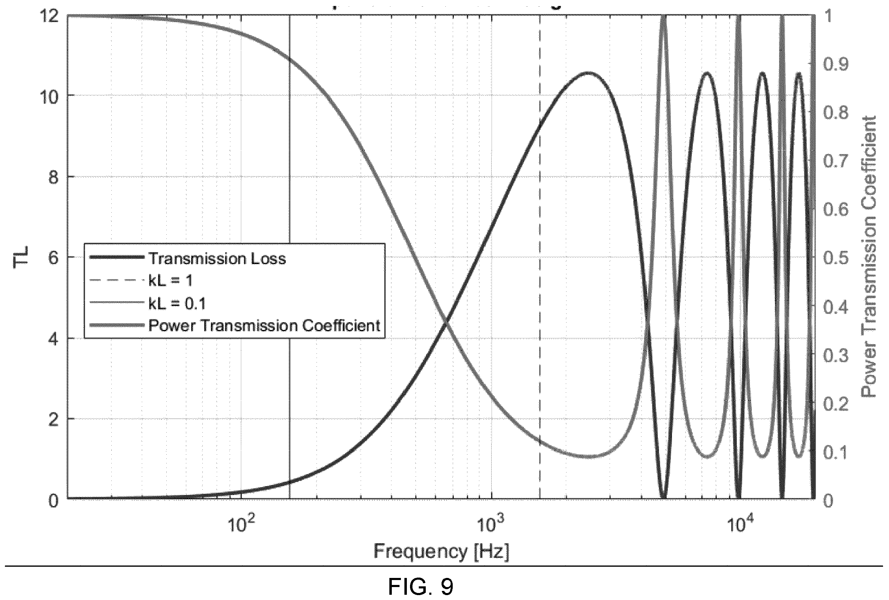

The "cutoff frequency" defines the performance of filters of these types and is defined as the frequency point where the power transmission coefficient reaches 0.5. This is also called the "half power point" or the "3 dB down point,", that is when transmission loss will reach 3 dB. The power transmission coefficient and transmission loss of this tuned design is shown in FIG. 9.

As shown in FIG. 9, peak transmission loss of about 10.54 dB occurred at 2456 Hz. This point occurs above kL=1, but could be adjusted to occur below kL=1 if alternative dimensions for the inlet chamber, outlet chamber, and central chamber were selected. The points where TL=3 dB on either side of this main "noise reduction valley" can also be located. These points occur at 492 Hz and 4409 Hz for this embodiment, which gives this particular embodiment good noise reduction within that entire range and a bandwidth of nearly 4000 Hz. This frequency range of at least 3 dB noise reduction falls in the desired range of 1000 and 4000 Hz, showing that this muffler has been tuned specifically for the NC100 product.

Example 2

A food processing device (NC100) was subjected to acoustic and temperature testing. The device was tested both with and without an acoustic muffler configured in accordance with the present disclosure. The acoustic muffler had an inlet chamber having a cross-section of 12mm x 12mm, an outlet chamber having a cross-section of 12mm x 12 mm, and a central expansion chamber having a cross-section of 12mm x 79mm and a length of 35mm. Acoustics of the device were measured by three microphones, each placed 1 meter from the device in an anechoic chamber. The energy average taken from each of the three microphones was calculated. Three runs of each test (for the device with and without the muffler) were performed.

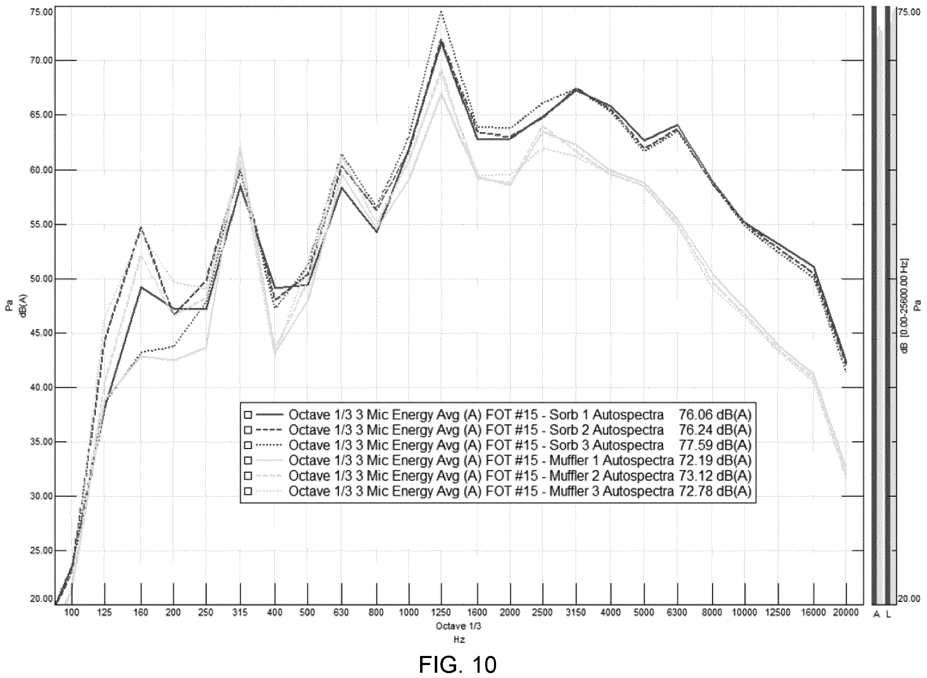

FIG. 10 illustrates the measured averaged sound pressure level of the device (with and without the acoustic muffler) over three runs in 1/3rd octave bands. As shown in FIG. 10, significant noise reduction began near 1250 Hz and upwards. The overall sound pressure levels of the three runs were averaged and the results are shown in Table 1 below.

*Table 1: Sound Pressure for Food Processing Device with and without Acoustic Muffler*

| Device Baseline | 76.7 dB(A) sound pressure at 1m |
|---|---|
| Device with Muffler | 72.7 dB(A) sound pressure at 1m |

As shown in Table 1, the acoustic muffler reduced the overall noise of the device by 4 dB(A). As used herein, "dB(A)" units indicate that the measured decibel units (dB) have been "A-weighted" according to standard techniques in the art. When measured decibel levels are A- weighted, certain frequencies are weighted differently than others to approximate how humans perceive sound at different frequencies. For example, humans hear better at 3000 Hz, so A-weighting techniques artificially boost those frequencies, and artificially diminish frequencies at which humans do not hear well, such as at or around 20 Hz.

It is important to note that the decibel scale is logarithmic. The smallest audible sound is 0dB. A sound that is 10 dB is ten times more powerful than a sound of 0 dB and a sound that is 30 dB is 1,000 times more powerful than a 0 dB sound. A noise reduction of 4 dB (or 4 dB(A)) is therefore significant and non-trivial.

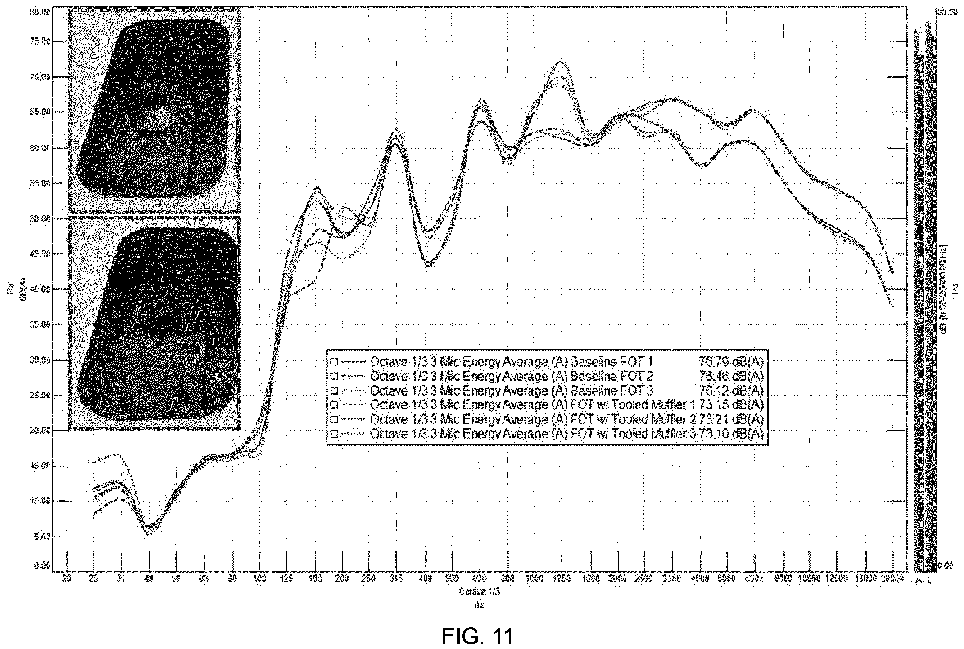

FIG. 11 illustrates the measured averaged sound pressure level of a food processing device (with and without an acoustic muffler) over three runs in 1/3rd octave bands. As shown in FIG. 11, the acoustic muffler caused significant noise reduction near 1250 Hz and upwards.

Example 3

A food processing device outfitted with the acoustic muffler described in Example 2 was subjected to heat testing. The heat testing was conducted in accordance with generally accepted industry practices and confirmed that the disclosed acoustic muffler allowed sufficient air flow to cool the motor of the device.

This application includes the following implementations:

1. An implementation of a food processing device having a reduced noise output, the food processing device comprising:

a housing comprising a motor with an air intake and an air exhaust;
and a noise reduction assembly comprising:

an acoustic muffler comprising an inlet chamber, an outlet chamber, and a central chamber in fluid connection with both the inlet chamber and the outlet chamber, wherein the outlet chamber is open to air surrounding the housing; and
a funnel-shaped region positioned proximate to the air exhaust from the motor and extending to the inlet chamber,
wherein the inlet chamber has a first cross-sectional area ($A_1$), the central chamber has a second cross-sectional area ($A_2$), and the outlet chamber has a third cross- sectional area ($A_3$), each measured along a plane perpendicular to a direction of sound propagation ($D_s$) through the acoustic muffler, and
wherein the second cross-sectional area ($A_2$) is greater than each of the first cross- sectional area ($A_1$) and the third cross-sectional area ($A_3$) or less than each of the first cross- sectional area ($A_1$) and the third cross-sectional area ($A_3$).

2. The food processing device of implementation 1, wherein the noise reduction assembly reduces a noise output of the food processing device by at least 2 dB.

3. The food processing device of implementation 1, wherein the second cross-sectional area ($A_2$) is at least three times greater than each of the first cross-sectional area ($A_1$) and the third cross- sectional area ($A_3$) or three times less than each of the first cross-sectional area ($A_1$) and the third cross-sectional area ($A_3$).

**Claims**

1. An acoustic muffler for a motorized food processing device, the acousic muffler comprising:

an inlet chamber having a first cross-sectional area ($A_1$);
a central chamber in fluid communication with the inlet chamber, the central chamber having a second cross-sectional area ($A_2$); and
an outlet chamber in fluid communication with the central chamber and an external environment, the outlet chamber having a third cross-sectional area ($A_3$),
wherein the second cross-sectional area ($A_2$) is greater than each of the first cross- sectional area ($A_1$) and the third cross-sectional area ($A_3$) or less than each of the first cross- sectional area ($A_1$) and the third cross-sectional area ($A_3$).

2. The acoustic muffler of claim 1, wherein the central chamber is an expansion chamber and the second cross-sectional area ($A_2$) is at least three times greater than each of the first cross- sectional area ($A_1$) and the third cross-sectional area ($A_3$).

3. The acoustic muffler of claim 1, wherein the central chamber is a contraction chamber and the second cross-sectional area ($A_2$) is at least three times less than each of the first cross- sectional area ($A_1$) and the third cross-sectional area ($A_3$).

4. The acoustic muffler of claim 1, wherien the first cross-sectional area ($A_1$), the second cross-sectional area ($A_2$), and the third cross-sectional area ($A_3$) are measured along a plane perpendicular to a direction of sound propagation ($D_s$) through the acoustic muffler.

5. The acoustic muffler of claim 1, wherein the external environment is air surrounding the motorized food processing device and the inlet chamber is in fluid communication with air expelled from a motor of the motorized food processing device.

6. The acoustic muffler of claim 1, wherein the acoustic muffler has a cutoff frequency at approximately 500 Hz, with a maximum transmission loss at approximately at 2300 Hz.

7. The acoustic muffler of claim 1, wherein the acoustic muffler reduces sound pressure emitted by the motorized food processing device by at least 2 dB.

8. The acoustic muffler of claim 1, wherein the motorized food processing device is at least one selected from the group of: an ice cream maker, a blender, a mixer, a micro puree machine, and a type of food processing device capable of blending, mixing, pureeing, slicing, dicing, chopping, grating, shaving, peeling, grinding, squeezing, folding, and/or kneading.

9. The acoustic muffler of claim 1, further comprising a funnel-shaped region positioned to receive air exhausted from the motor, wherein the funnel-shaped region extends to the inlet chamber.

10. The acoustic muffler of claim 1, wherein the central chamber has a length measured along a direction of sound propagation ($D_s$) through the acoustic muffler, and the length is less than a wavelength of a prominent frequency emitted by the motorized food processing device.

11. The acoustic muffler of claim 1, wherein the outlet chamber is directed toward a rear of the motorized food processing device.

12. A method of reducing sound emitted by a food processing device, the method comprising:

    operating a motor of the food processing device;
    directing air exhausted by the motor and noise generated by the motor into a funnel-shaped region leading to an acoustic muffler having an inlet chamber fluidly connected to a central chamber that is fluidly connected to an outlet chamber open to an external environment; and
    directing the air exhasted by the motor and the noise generated by the motor through the acoustic muffler and into the external environment.

13. The method of claim 12, wherein the inlet chamber has a first cross-sectional area ($A_1$), the central chamber has a second cross-sectional area ($A_2$), and the outlet chamber has a third cross-sectional area ($A_3$), each measured along a plane perpendicular to a direction of sound propagation ($D_s$) through the acoustic muffler, and the second cross-sectional area ($A_2$) is at least three times greater than each of the first cross-sectional area ($A_1$) and the third cross-sectional area ($A_3$) or three times less than each of the first cross-sectional area ($A_1$) and the third cross-sectional area ($A_3$).

14. The method of claim 12, wherein the food processing device is at least one selected from the group of: an ice cream maker, a blender, a mixer, a micro puree machine, and a type of food processing device capable of blending, mixing, pureeing, slicing, dicing, chopping, grating, shaving, peeling, grinding, squeezing, folding, and/or kneading.

15. The method of claim 12, wherein the acousic muffler reduces the sound emitted by the food processing device by at least 2 dB.

10

300

200

202

100

FIG. 1

FIG. 2A

FIG. 2B

FIG. 2C

FIG. 3A

FIG. 3B

FIG. 4A

FIG. 4B

FIG. 4C

FIG. 5A

FIG. 5B

FIG. 5C

## Method 600

Operating a motor of a food
processing device
**602**

↓

Directing air exhausted by the motor and noise
generated by the motor into a funnel-shaped
region leading to an acoustic muffler
**604**

↓

Directing the air exhausted by the motor and the
noise generated by the motor through the acoustic
muffler and into the external environment
**606**

FIG. 6

FIG. 7

FIG. 8

FIG. 9

FIG. 10

FIG. 11

Europäisches
Patentamt
European
Patent Office
Office européen
des brevets

# EUROPEAN SEARCH REPORT

**Application Number**

EP 23 19 4088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 053 425 A (GUANGDONG MIDEA WHITE HOME APPLIANCE TECH INNOVATION CENTER CO LTD ET) 24 April 2020 (2020-04-24) | 1,4-6,8,11 | INV.<br>A47J43/00<br>A47J43/046 |
| Y | * paragraphs [0004], [0005], [0047] *<br>* figures 3,4 * | 2,3,7,9,10 | G10K11/16<br>F01N1/00<br>A47J43/07 |
| Y | US 6 722 467 B1 (KUSCHE DAVID W [US] ET AL) 20 April 2004 (2004-04-20)<br>* column 6, line 38 - line 48 *<br>* figure 2 * | 2,3,7 | F01N1/08 |
| Y | CN 107 906 748 A (JIANGSU WEINENG ELEC CO LTD) 13 April 2018 (2018-04-13)<br>* paragraph [0026] *<br>* figure 3 * | 3 | |
| Y | KR 100 635 694 B1 (LS CABLE LTD [KR]) 17 October 2006 (2006-10-17)<br>* figure 2 *<br>* claim 1 * | 9 | |
| Y | CN 204 165 212 U (HAIER GROUP CORP; QINGDAO HAIER AIR CONDITIONER) 18 February 2015 (2015-02-18)<br>* paragraphs [0010], [0012] * | 10 | TECHNICAL FIELDS SEARCHED (IPC)<br><br>A47J<br>G10K<br>F01N |
| A | CN 202 636 713 U (LI LAN) 2 January 2013 (2013-01-02)<br>* paragraph [0002] *<br>* figure 4 * | 1 | |

The present search report has been drawn up for all claims

| Place of search | Date of completion of the search | Examiner |
|---|---|---|
| The Hague | 16 February 2024 | Breccia, Luca |

EPO FORM 1503 03.82 (P04C01)

Europäisches
Patentamt

European
Patent Office

Office européen
des brevets

**Application Number**

EP 23 19 4088

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-11

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 23 19 4088

The Search Division considers that the present European patent application does not comply with the requirements of unity of invention and relates to several inventions or groups of inventions, namely:

1. claims: 1-11

   Acoustic muffler for a motorized food processing device, the acoustic muffler comprising: an inlet chamber; a central chamber in fluid communication with the inlet chamber; and an outlet chamber in fluid communication with the central chamber and an external environment, wherein the cross-sectional area of the central chamber is greater than each of the cross-sectional areas of the inlet chamber and the outlet chamber..

   - - -

2. claims: 12-15

   A method of reducing sound emitted by a food processing device, the method comprising: operating a motor of the food processing device; directing air exhausted by the motor and noise generated by the motor into a funnel-shaped region leading to an acoustic muffler having an inlet chamber fluidly connected to a central chamber that is fluidly connected to an outlet chamber open to an external environment; and directing the air exhausted by the motor and the noise generated by the motor through the acoustic muffler and into the external environment.

   - - -

## ANNEX TO THE EUROPEAN SEARCH REPORT
## ON EUROPEAN PATENT APPLICATION NO.

EP 23 19 4088

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2024

| Patent document cited in search report | | Publication date | Patent family member(s) | Publication date |
|---|---|---|---|---|
| CN 111053425 | A | 24-04-2020 | NONE | |
| US 6722467 | B1 | 20-04-2004 | NONE | |
| CN 107906748 | A | 13-04-2018 | NONE | |
| KR 100635694 | B1 | 17-10-2006 | NONE | |
| CN 204165212 | U | 18-02-2015 | NONE | |
| CN 202636713 | U | 02-01-2013 | NONE | |

EPO FORM P0459

For more details about this annex : see Official Journal of the European Patent Office, No. 12/82